# EUROPÄISCHE PATENTANMELDUNG

(11) **EP 1 923 527 A1**
(43) Veröffentlichungstag der Anmeldung: **21.05.2008**
(21) Anmeldenummer: 07033513.8
(22) Anmeldetag: 11.10.2007
(51) Int. Cl.: E04G 21/04, E21D 11/10, F16K 3/24

(54) **Füllanschluss für eine Schalung zum Einfüllen von Beton**

(30) Priorität: 14.11.2006 DE 102006053552
(71) Anmelder: Ratec Maschinenentwicklungs- und Verwaltungs-GmbH, 68766 Hockenheim (DE)
(72) Erfinder: Reymann, Andreas, 68766 Hockenheim (DE)
(74) Vertreter: Petirsch, Markus

(57) **Zusammenfassung**

Die vorliegende Erfindung betrifft einen Füllanschluss (1) für eine Schalung (2) zum Einfüllen von Beton in die Schalung (2). Die Schalung (2) umfasst ein Kolbenrohr (3) und einen Einfüllstutzen (4). Das Kolbenrohr (3), dessen eines Ende an einem Schalungselement der Schalung (2) bündig abschließend anordnenbar ist, hat einen in dem Kolbenrohr (3) beweglichen Verschlusskolben (7), der eine in Richtung auf die Schalung (2) zu orientierte Stirnwand (20) aufweist und der von einem Stellmechanismus (10) bewegt wird. Der Einfüllstutzen (4) ist im Bereich der Schalung (2) unter einem spitzen Winkel mit einer Wandung des Kolbenrohrs (3) derart verbunden, dass in den Einfüllstutzen (4) eingefüllter Beton in das Kolbenrohr (3) hineinfließt. Der Verschlusskolben (7) des Kolbenrohres (3) ist so in dem Kolbenrohr (3) bewegbar, dass die Stirnwand (20) des Verschlusskolbens (7) schalungsglatt mit der Schalung (2) abschließt.

## Beschreibung

Die vorliegende Erfindung betrifft einen Füllanschluss für eine Schalung zum Einfüllen von Beton in die Schalung.

Beim Herstellen von Betonbauteilen, insbesondere von Gebäudeaußenwänden, sind Schalungssysteme bekannt, die zwei parallel verlaufende Schalungselemente umfassen. Zum Befüllen derartiger Schalungen sind verschiedene Methoden bekannt. Beispielsweise wird herkömmlicher Beton von oben in die Schalung eingeführt, so dass der Beton im freien Fall in den Hohlraum der Verschalung fällt. Der Beton füllt dann die Verschalung auf, bis er die Oberkante der Schalungselemente erreicht. Ein derartiges Befüllen wird bevorzugt bei vertikal ausgerichteten Gebäudewänden vorgenommen.

Alternativ wird der Beton durch Füllanschlüsse in einem seitlichen Schalungselement in die Schalung hineingepumpt. Die Füllanschlüsse befinden sich dann in der Regel im unteren Bereich der Schalung. An den Schalungen ist jeweils ein Stutzen vorgesehen, an den das Füllrohr druckdicht angeschlossen werden kann, so dass der Beton durch den Stutzen in die Schalung mit Druck hineingepumpt werden kann. Sobald der Beton in der Schalung erhärtet ist, wird das Zufüllrohr von dem Stutzen entfernt. Wenn der Beton sowohl in der Schalung als auch in dem Stutzen erhärtet ist, ist ein Entfernen der Schalung sehr schwierig, da ein störender Pfropfen zurück bleibt.

Aufgabe der Erfindung ist es, einen Einfüllstutzen vorzuschlagen, der die dem Stand der Technik bekannten Nachteile behebt.

Gelöst wird die vorliegende Aufgabe durch einen Füllanschluss für eine Schalung zum Einfüllen von Beton gemäß den Merkmalen des Anspruchs 1. Die Unteransprüche definieren bevorzugte, nicht selbstverständliche Ausgestaltungen des erfindungsgemäßen Füllanschlusses.

Der erfindungsgemäße Füllanschluss für eine Schalung zum Einfüllen von Beton in die Schalung, umfasst ein Kolbenrohr und einen Einfüllstutzen, der mit dem Kolbenrohr verbunden ist. Das Kolbenrohr und der Einfüllstutzen bilden gemeinsam den im Wesentlichen V-förmigen Füllanschluss. Das Kolbenrohr des Füllanschlusses ist mit einem Ende an dem Schalungselement in der Schalung bündig angeordnet. Das Kolbenrohr weist einen beweglichen Verschlusskolben auf, der eine in Richtung auf die Schalung zu orientierte Stirnwand aufweist und der von einem Stellmechanismus im Inneren des Kolbenrohres bewegt wird. Der Verschlusskolben kann so im Kolbenrohr bewegt werden, dass seine Stirnwand schalungsglatt mit der Schalung abschließt, an der das Kolbenrohr angeordnet ist. Der Einfüllstutzen ist im Bereich der Schalung unter einem spitzen Winkel an der Wandung des Kolbenrohres befestigt. Die Verbindung zwischen Kolbenrohr und Einfüllstutzen ist derart vorgesehen, dass Beton, der in den Einfüllstutzen eingeführt wird, in das Kolbenrohr hineinfließt, um schließlich in die Schalung zu gelangen.

Nachdem die Schalung vollständig mit Beton gefüllt ist, also der Beton durch den Einfüllstutzen und das Kolbenrohr in die Schalung gelangt ist, wird der Verschlusskolben in Richtung Schalung bewegt. Der in dem Kolbenrohr vorhandene Beton wird in die Schalung hineingepresst, bis die Stirnwand des Verschlusskolbens mit der Schalung bündig abschließt. Somit verbleibt kein Beton in dem Kolbenrohr des Füllanschlusses. Nach dem Trocknen des Betons wird deshalb auch kein Pfropfen an der Schalungswand gebildet, der ein Entfernen der Schalung nach dem Trocknen des Betons behindern würde.

Vorzugsweise verschließt der Verschlusskolben mit seiner Seitenwand den Einfüllstutzen, wenn der Verschlusskolben mit seiner Stirnwand schalungsglatt mit der Schalung abschließt. In dieser Position ist die Stirnwand des Verschlusskolbens im Wesentlichen bündig mit dem Ende des Kolbenrohres des Füllanschlusses. Abhängig von der Größe des Kolbenrohres und der in der Schalung vorgesehenen Öffnung zum Anschluss des Kolbenrohres des Füllanschlusses steht das Kolbenrohr entweder auf dem Schalungselement der Schalung auf oder ragt so weit in das Schalungselement der Schalung hinein, bis es mit der Innenseite des Schalungselements bündig ist. In Abhängigkeit von der Anordnung des Kolbenrohres an bzw. in dem Schalungselement der Schalung ist auch die Endposition des Verschlusskolbens in dem Kolbenrohr sowie der Querschnitt der Öffnung in der Schalung festzulegen. Je nach Anordnung reicht der Verschlusskolben in seiner Endposition über das Ende des Kolbenrohres des Anschlusses hinaus. Der Öffnungsquerschnitt in der Schalung ist an den Innenquerschnitt des Kolbenrohres bzw. an den Außenquerschnitt des Kolbenrohres angepasst.

Wird der Verschlusskolben innerhalb des Kolbenrohres von seiner Ausgangsposition in Richtung auf die Schalung zu bewegt, so ragt der Verschlusskolben mit seiner Seitenwand bei fortschreitender Bewegung immer weiter in die Verbindungsstelle zwischen Einfüllstutzen und Kolbenrohr hinein, so dass der Verbindungsquerschnitt zwischen Kolbenrohr und Einfüllstutzen verringert wird. Auf diese Weise kann durch eine geeignete Positionierung des Verschlusskolbens innerhalb des Kolbenrohres der Förderstrom des Betons in die Schalung dosiert werden. Auf einfache Weise ist es also möglich, die Füllgeschwindigkeit der Schalung mit dem Beton zu steuern. Der Verschlusskolben kann so weit in Richtung auf die Schalung zu bewegt werden, dass er den Verbindungsquerschnitt zwischen Einfüllstutzen und Kolbenrohr vollständig abschließt. Ein weiteres Einfließen von Beton in das Kolbenrohr ist dann ausgeschlossen.

Wird der Verschlusskolben noch weiter in Richtung auf die Schalung zu bewegt, wird bei geschlossenem Einfüllstutzen der sich noch im Kolbenrohr befindliche Rest an Beton in die Schalung hineingepresst. Erst wenn der Verschlusskolben seine Endposition erreicht hat, also schalungsglatt mit der Innenseite des Schalungselements der Schalung abschließt, wird die Bewegung des Verschlusskolbens beendet.

Auf diese Weise kann an dem erfindungsgemäßen Füllanschluss nicht nur eine Förderstromdosierung vorgenommen werden, gleichzeitig wird der Füllanschluss nach Schließen des Förderstroms schalungsglatt am Betonelement, das in der Schalung gebildet wird, abgesperrt. Hierdurch verbleibt am erstarrten Betonelement kein Restbetonstutzen, auch Pfropfen genannt, welcher die Ausschalarbeiten erschwert. Insbesondere bei der Herstellung von Sichtbetonoberflächen hat sich im Rahmen der Erfindung der erfindungsgemäße Füllanschluss als sehr vorteilhaft bewährt. Aufgrund des schalungsglatten Abschlusses des Verschlusskolbens mit der Innenseite des Schalungselements der Schalung sind keine oder nur kaum sichtbare Spuren des Anschlusses an dem erstarrten Betonkörper zu erkennen.

Vorzugsweise ist es aber auch möglich, den Verschlusskolben so weit über das freie Ende des Kolbenrohres hinaus zu bewegen, um beispielsweise bewusst einen Abdruck in dem zu erstellenden Betonkörper zu hinterlassen. Insbesondere ist dies vorteilhaft, wenn die Stirnwand des Verschlusskolbens eine auswechselbare Stirnfläche aufweist, die beispielsweise einen Stempel oder eine Matrize umfasst, mit der etwa das Herstellungsdatum des Betonteils eingestempelt werden kann. Ähnlich wie mit einem Prägestempel können auch weitere Informationen in das Betonbauteil eingeprägt werden, beispielsweise die Herstellerfirma oder die Zusammensetzung des verwendeten Betons.

Der zur Bewegung des Verschlusskolbens innerhalb des Kolbenrohres vorgesehene Stellmechanismus umfasst in einer bevorzugten Ausführungsform eine Spindel. Sie kann entweder manuell angetrieben werden, indem eine Handkurbel am freien Ende der Spindel befestigt ist, oder motorisch, indem ein Motor direkt oder über ein Getriebe mit der Spindel verbunden ist. Die Bewegung des Verschlusskolbens in dem Kolbenrohr lässt sich dann automatisieren, so dass auch der Förderstrom des Betons, also die Flussmengengeschwindigkeit, automatisch geregelt werden kann. Mehrere Füllanschlüsse in einer Schalung können zentral gesteuert werden. Bei einem motorischen Antrieb der Spindel kann eine Justierung des Verschlusskolbens auch über eine zentrale Steuerung, beispielsweise in Form von Software, geregelt werden. Bei einer mechanischen Verstellung des Verschlusskolbens können an der Spindel Arretierungen vorgesehen werden, die derart fixiert sein können, das ein Weiterdrehen über die Arretierung hinaus nicht möglich ist.

In einer ebenfalls bevorzugten Ausführungsform weist der Einfüllstutzen des Füllanschlusses an seinem freien Ende eine Kupplung auf. Die Kupplung dient zum Anschluss von Förderleitungen, durch die der Beton in den Füllanschluss geleitet wird. Vorzugsweise sind diese Kupplungen als Schnellkupplungen ausgebildet, um ein schnelles An- und Abkuppeln der Förderleitungen zu ermöglichen. Die Schnellkupplungen können auswechselbar sein, so dass sie stets mit Kupplungsstücken diverser Hersteller und unterschiedlicher Systeme korrespondieren. Auf diese Weise können die Füllanschlüsse an den jeweils zur Verfügung stehenden Schnellkupplungsanschluss der jeweiligen Förderleitung angepasst werden.

Als sehr vorteilhaft hat sich ein Kupplungsanschluss erwiesen, der als Bajonett- Verschluss ausgeführt ist. In diesem Fall lässt sich die Förderleitung sehr einfach an den Füllanschluss ankuppeln.

Der erfindungsgemäße Füllanschluss weist den weiteren Vorteil auf, dass es aufgrund des Verschließens des Einfüllstutzens und des schnellen Abnehmens der Förderleitung von dem Füllanschluss durch das Vorhandensein eines Schnellkupplungsanschlusses möglich ist, den Einfüllstutzen nach Befüllung der Schalung zu reinigen. Dadurch wird der Einfüllstutzen mit Wasser ausgespült, bis der gesamte in dem kurzen Stück des Einfüllstutzens vorhandene Beton entfernt ist. Dieser Vorgang wird in der Regel dann durchgeführt, wenn sich der nicht erhärtete Frischbeton in Jungbeton gewandelt hat, also soweit erhärtet ist, dass auch beispielsweise die Schalung schon entnommen werden kann. Der Jungbeton ist also noch nicht komplett ausgehärtet. Da die Reinigung des Füllanschlusses derart einfach ist, wird die Handhabbarkeit des Anschlusses insgesamt deutlich verbessert. Der Verschlusskolben muss während des Reinigens den Einfüllstutzen nur insoweit abdichten, dass das eingespritzte Wasser nicht in die Schalung gelangt.

In einer weiter bevorzugten Ausführungsform ist zwischen dem Verschlusskolben und dem Kolbenrohr eine Dichtung vorgesehen, damit kein Beton zwischen den Verschlusskolben und das Kolbenrohr hineinfließt, was zu einer Beschädigung des Füllanschlusses führen würde. Bevorzugt ist diese Dichtung zwischen Verschlusskolben und Kolbenrohr als amorphe Dichtung ausgebildet. Bei einem Kolben, der mit sehr geringen Toleranzen in das Kolbenrohr eingepasst wird, kann die amorphe Dichtung mittels eines Fettfilms realisiert sein. Der Fettfilm unterstützt darüber hinaus auch das Gleitverhalten des Kolbens in dem Kolbenrohr, so dass eine gleitende Bewegung unterstützt und ein Verkanten verhindert wird. Darüber hinaus wird durch den Dichtfilm gewährleistet, dass der durch das Kolbenrohr fließende Beton nicht an der Innenwandung des Kolbenrohres haften bleibt.

Zur Befestigung des Füllanschlusses an der Schalung bieten sich lösbare oder feste Verbindungen an. Bevorzugt wird bei einer lösbaren Verbindung der Füllanschluss an die Schalung angeflanscht. Am Ende des Kolbenrohres ist ein Flansch vorgesehen, der in eine an der Schalung angeordnete Aufnahme geführt oder eingesteckt wird, so dass der Füllanschluss an der Schalung sicher und zuverlässig gehalten wird. Eine derartige Ausführungsform bietet den Vorteil, dass der Füllanschluss komplett von der Schalung abgenommen werden kann. Bei einem Defekt des Füllanschlusses kann er einfach durch einen neuen ersetzt werden. Darüber hinaus lassen sich auch nach der Herstellung der Betonteile die Schalungselemente der Schalung besser lagern, wenn der Füllanschluss abgenommen werden kann. Allerdings muss bei der Befestigung des Füllanschlusses darauf geachtet werden, dass der Flansch des Füllanschlusses sicher in seiner Aufnahme gehalten wird. Gegebenenfalls ist eine Justierung des Kolbens notwendig, damit der Verschlusskolben in seiner maximalen Auslenkung die gewünschte schalungsglatte Position einnimmt. Je nach Anordnung des Kolbenrohres an der Schalung (mit der Innenseite oder der Außenseite des Schalungselements der Schalung abschließend) muss der Verschlusskolben so weit bewegt werden, dass er über das Ende des Kolbenrohres hinaus ragt oder bündig mit ihm abschließt.

Vorzugsweise ist der Füllanschluss mit der Schalung verschweißt, was eine dauerhafte, zuverlässige und robuste Verbindung darstellt. Die ordnungsgemäße Verbindung zwischen Füllanschluss und Schalung kann bereits im Herstellungswerk vorgenommen werden, ebenso das Festlegen der Endposition des Verschlusskolbens. Bei der Vorortmontage sind keine zusätzlichen Arbeiten notwendig. Auf ein Nachjustieren des Bewegungsweges des Verschlusskolbens kann in der Regel verzichtet werden. Es muss lediglich die Förderleitung an den Füllstutzen angeschlossen werden.

In einer bevorzugten Ausführungsform sind das Kolbenrohr und der darin bewegbare Verschlusskolben zylindrisch ausgebildet. Die Begriffe Rohr (Kolbenrohr) und Kolben (Verschlusskolben) werden im Sinne der Anmeldung allgemein verstanden, so dass sie nicht auf runde Ausführungen beschränkt sind. Vielmehr können sowohl das Rohr als auch der Kolben nahezu beliebige Querschnitte aufweisen. Sie müssen jedoch aufeinander angepasst sein. Selbstverständlich ist es auch möglich, ein Vierkantrohr zu verwenden, in der ein quaderförmiger Verschlusskolben beweglich angeordnet ist.

Der Einfüllstutzen kann bevorzugterweise zylindrisch ausgebildet sein, so dass die in der Regel mit einem runden Querschnitt ausgebildeten Förderleitungen auf einfache Weise und ohne zusätzlichen Adapter angeschlossen werden können.

Bevorzugte Ausführungsbeispiele werden anhand der beigefügten Figuren ohne Einschränkung der Allgemeinheit im Detail beschrieben. Es zeigen:
- Figuren 1a - 1c: einen Füllanschluss an einer Schalung in perspektivischer Ansicht;
- Figuren 2a - 2c: den Füllanschluss aus Figur 1 in einer Schnittansicht mit unterschiedlichen Positionen eines Verschlusskolbens;
- Figur 3: eine zweite Ausführungsform eines Füllanschlusses in perspektivischer Ansicht;
- Figur 4a und 4b: einen Verschlusskolben eines Füllanschlusses mit austauschbarer Stirnfläche im Detail.

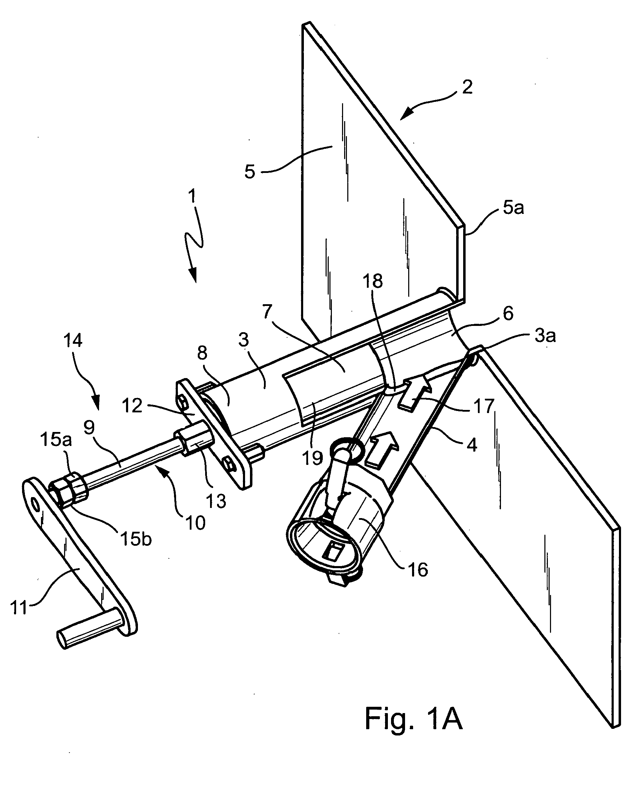

Die Figuren 1a - 1 c zeigen einen Füllanschluss 1, der mit einer Schalung 2 fest verbunden ist. Der im Wesentlichen V-förmige Füllanschluss 1 umfasst ein Kolbenrohr 3 und einen daran befestigten Einfüllstutzen 4, so dass eine einstückige Außenstruktur des Füllanschlusses 1 gebildet wird. Das Kolbenrohr 3 ist an ein Schalungselement 5 der Schalung 2 angeschweißt, so dass eine dauerhafte Verbindung zwischen Kolbenrohr und Schalung gebildet wird. Das Kolbenrohr 3 ist unter einem Winkel von 90 Grad, also rechtwinklig zur Schalung 2 positioniert. Das Kolbenrohr 3 ist mit einem Schalungselement 5 mit der Schalung 2 derart verbunden, dass das Ende 3a des Kolbenrohres 3 bündig mit der Innenseite 5a des Schalungselements 5 abschließt. Das Schalungselement 5 weist eine Öffnung 6 auf, deren Durchmesser exakt dem Außendurchmesser des Kolbenrohres 3 entspricht.

Der Einfüllstutzen 4 ist im Bereich der Schalung 2 mit dem Kolbenrohr 3 befestigt. In dem gezeigten Beispiel ist der Einfüllstutzen 3 unter einem Winkel von ca. 30 Grad an der Wandung des Kolbenrohres 3 seitlich angeordnet.

In dem Kolbenrohr 3 ist ein Verschlusskolben 7 beweglich gelagert. Er kann in einer Linearbewegung vom hinteren freien Ende 8 des Kolbenrohres 3 in Richtung auf die Schalung 2 (also in Richtung Kolbenrohrende 3a) zu bewegt werden. Die Linearbewegung des Verschlusskolbens 7 wird durch einen als Spindel 9 ausgebildeten Stellmechanismus 10 umgesetzt. Die Spindel 9 weist an ihrem einen Ende eine Handkurbel 11 auf, mit der sie manuell von einem Benutzer betätigt werden kann. Alternativ kann am freien Ende der Spindel 9 auch ein Motor direkt oder über ein Getriebe angebracht sein, so dass die Spindel 9 motorisch gedreht wird.

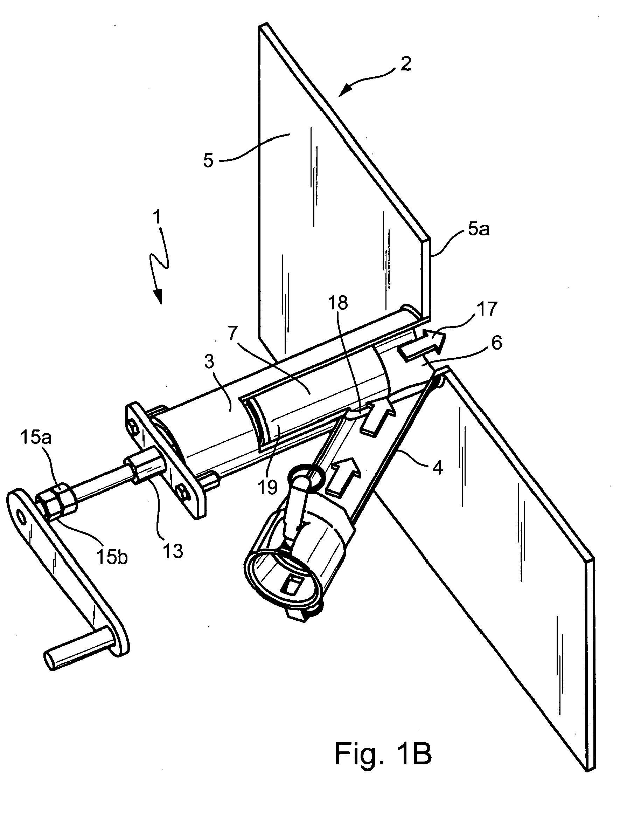

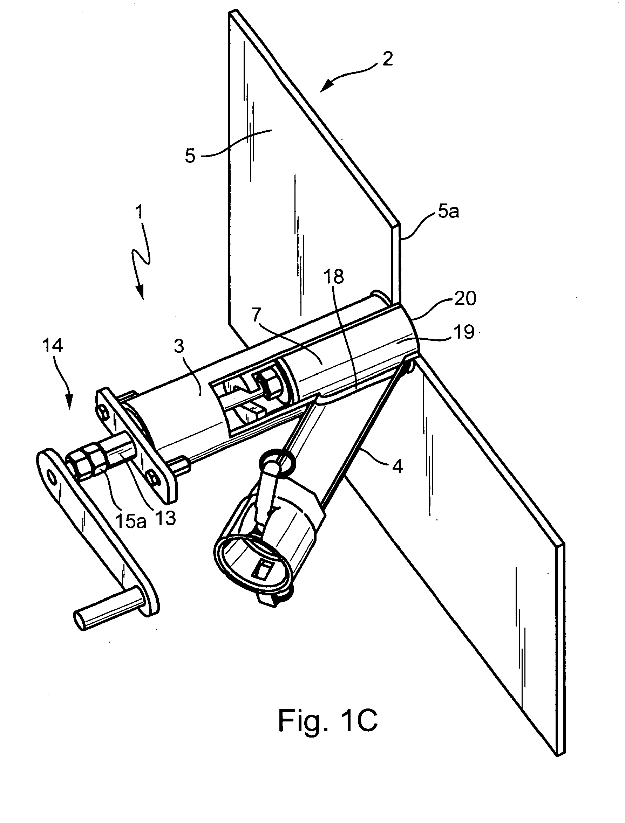

Am freien Ende 8 des Kolbenrohres 3 ist dazu eine Spindelhalterung 12 vorgesehen, an der ein Anschlag 13 ausgebildet ist. Der Anschlag 13 ist Teil einer Justiereinrichtung 14, zu der auch zwei Muttern 15a, 15b gehören, die auf die Spindel 9 geschraubt sind und gegeneinander gekontert sind, um ihre Position an der Spindel zu fixieren. Die Spindel 9, die drehbar in der Spindelhalterung 12 gelagert ist, wird so weit gedreht, bis die dem Kolbenrohr 3 gegenüber liegende Mutter 15a an dem Anschlag 13 anschlägt. Hierdurch wird der Bewegungsweg der Spindel 9 und somit der Bewegungsweg des Verschlusskolbens 7 in dem Kolbenrohr 3 begrenzt. Die Endposition des Verschlusskolbens 7 (Fig. 1 c) in Bezug auf die Schalung 2 kann durch Verschieben der Muttern 15a, 15b auf der Spindel 9 einfach und unkompliziert festgelegt werden.

Der Einfüllstutzen 4 umfasst an seinem freien Ende eine als Schnellkupplung ausgebildete Kupplung 16, an die (hier nicht gezeigte) Förderleitungen zum Einleiten von Beton in den Füllanschluss 1 angeschlossen werden können.

Figur 1 a zeigt den Fall, wenn der Verschlusskolben 7 in seiner Startposition am freien Ende 8 des Kolbenrohres 3 angeordnet ist. Ein Betonfluss durch den Einfüllstutzen 4 wird ungehindert durch das Kolbenrohr 3 und die Öffnung 6 des Schalungselements 5 in die Schalung 2 eingeleitet. Die Flussrichtung des Betons ist durch die Pfeile 17 in dem Einfüllstutzen 4 repräsentiert. Die Durchgangsöffnung 18 ist maximal. Der größtmögliche Betonfluss ist gewährleistet.

Figur 1 b zeigt den Fall, wenn der Verschlusskolben 7 in Richtung auf die Schalung 2 zu bewegt worden ist. In dieser Position wird die zwischen dem Kolbenrohr 3 und dem Einfüllstutzen 4 gebildete Durchgangsöffnung 18 teilweise von dem Verschlusskolben 7 verschlossen. Seine Seitenwand 19 ragt in die Durchgangsöffnung 18 hinein, so dass der Betonfluss verringert wird. Da der Verschlusskolben 7 länger ist als die größte Ausdehnung der Durchgangsöffnung 18, wird verhindert, dass Beton in dem Kolbenrohr 3 in Richtung des freien Endes 8 fließen kann. Der Beton wird also nach wie vor in die Schalung 2 geleitet.

Figur 1 c zeigt das Ende des Befüllungsvorgangs der Schalung 2. Der Verschlusskolben 7 ist in dem Kolbenrohr 3 so weit nach vorne bewegt worden, dass seine Stirnwand 20 bündig mit der Innenseite des Schalungselements 5 der Schalung 2 abschließt. Die Durchgangsöffnung 18 zwischen dem Kolbenrohr 3 und dem Einfüllstutzen 7 ist nun komplett verschlossen. Es kann kein weiterer Beton durch den Füllanschluss 1 in die Schalung 2 fließen. Gleichzeitig wird mit dem Bewegen des Verschlusskolbens 7 in Richtung Kolbenrohrende 3a der in dem Kolbenrohr 3 verbleibende Rest an Beton in die Schalung 2 gedrückt.

In Figur 1c ist auch deutlich zu erkennen, dass nun die Muttern 15 gegen den Anschlag 13 der Justiereinrichtung 14 drücken bzw. an ihm anliegen. Hierdurch wird der Bewegungsweg des Verschlusskolbens 7 begrenzt. Seine Endposition ist eindeutig definiert. Bevorzugterweise ist die Endposition wie hier so gestaltet, dass die Stirnwand 20 des Verschlusskolbens 7 bündig mit der Innenseite des Schalungselements 5 abschließt. Auf diese Weise wird eine schalungsglatte durchgehende Betonfläche innerhalb des Schalungselements 5 erzeugt. In dem herzustellenden Betonteil sind deshalb keine Spuren des Verschlusskolbens 7 bzw. der Einleitung des Betons sichtbar.

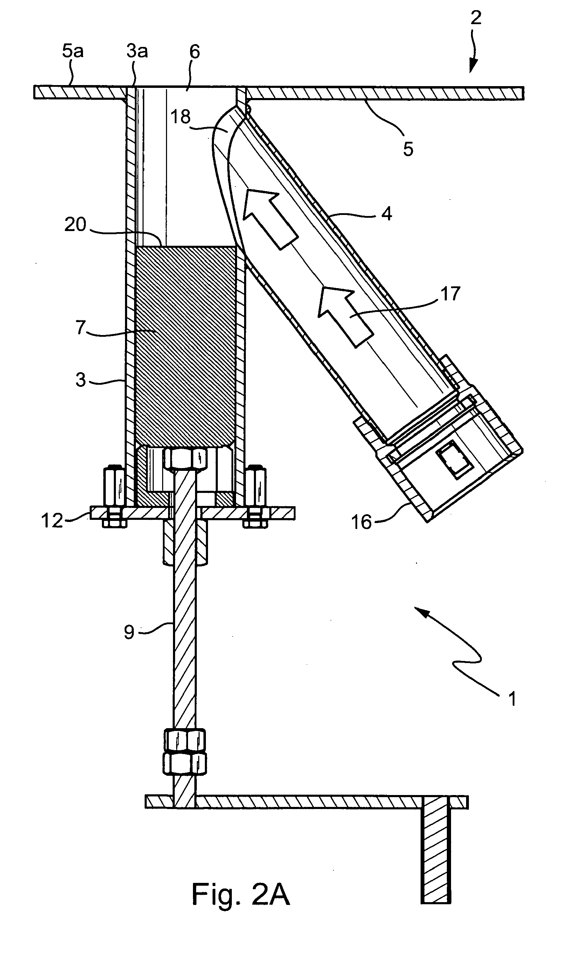

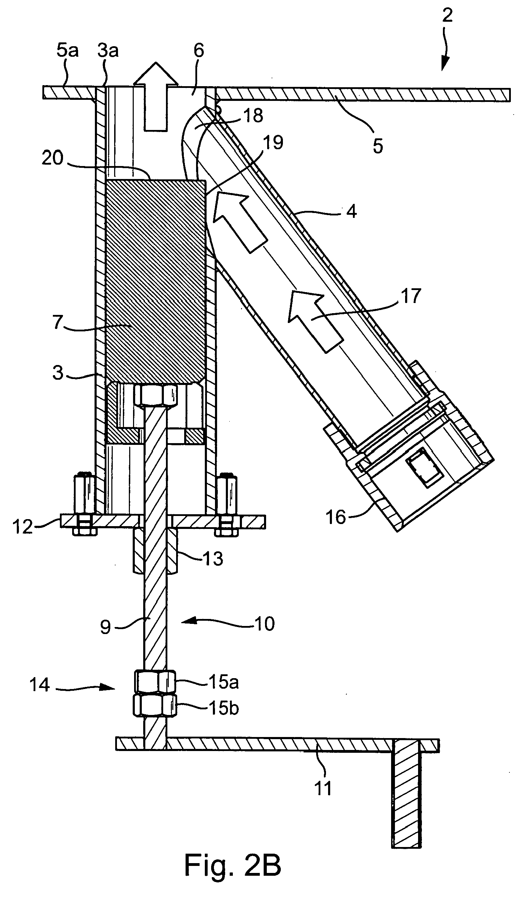

In den Figuren 2a - 2c ist die Durchgangsöffnung 18 deutlich zu erkennen, die zwischen dem Kolbenrohr 3 und dem Einfüllstutzen 4 gebildet wird. Je weiter der Verschlusskolben 7 in dem Kolbenrohr 3 in Richtung Schalungselement 5 bewegt wird, desto geringer wird die Durchgangsöffnung 18. Hierdurch lässt sich eine einfache Förderstromdosierung vornehmen, ohne dass zusätzliche Vorrichtungen vorgesehen sein müssen.

Die Schnittbilder (Fig. 2a - c) verdeutlichen, dass das Kolbenrohr 3 bündig mit der Innenseite 5a des Schalungselements 5 abschließt. Die Öffnung 6 des Schalungselements 5 hat einen Durchmesser, der dem Außendurchmesser des Kolbenrohres 3 entspricht. Das Kolbenrohr 3 ist im Wesentlichen senkrecht mit dem Schalungselement 5 verbunden. Beide Elemente sind miteinander verschweißt. Wichtig ist hierbei auch, dass der Einfüllstutzen 4 im Bereich der Schalung 2 an dem Kolbenrohr 3 befestigt ist. Dabei ist der Einfüllstutzen 4 so angeordnet, dass zwischen der schalungsnahen Seite des Einfüllstutzens 4 und dem Ende 3a des Kolbenrohres 3 so viel Überstand des Kolbenrohres 3 vorgesehen ist, dass das Kolbenrohr 3 schalungsglatt in die Öffnung 6 des Schalungselements 5 eingeschoben werden kann und eine Schweißnaht zwischen der Außenseite des Schalungselements 5 und dem Einfüllstutzen 4 an dem Kolbenrohr 3 angebracht werden kann.

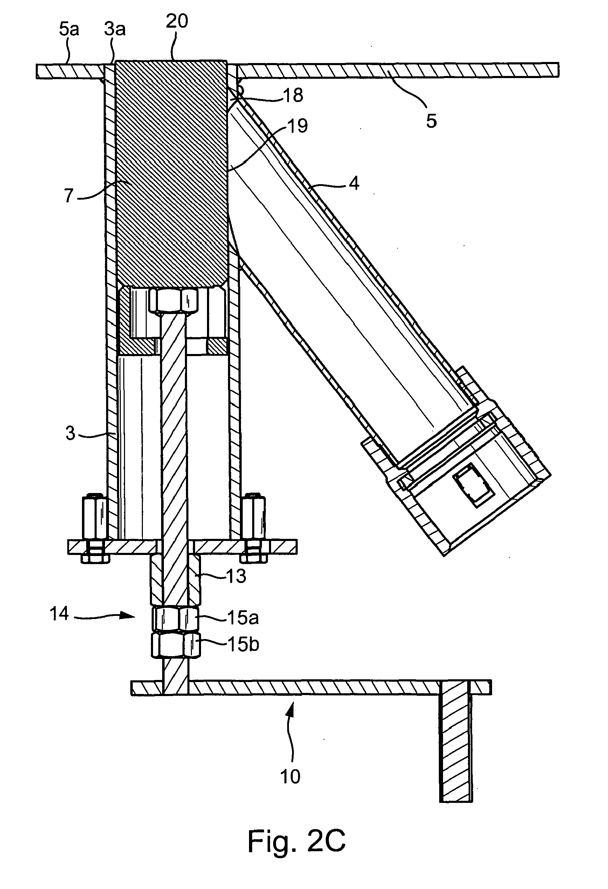

Figur 2c zeigt, dass die Justiereinrichtung 14 auch derart eingestellt sein kann, dass die Stirnwand 20 des Verschlusskolbens 7 etwas über das Ende 3a des Kolbenrohres 3 hinaus reicht, so dass der Verschlusskolben 7 in den noch flüssigen Beton in der Schalung 2 hinein gepresst wird. Dies mag unter bestimmten Gegebenheiten sinnvoll sein, beispielsweise, wenn bewusst eine Markierung der Einfüllung in dem Betonfertigteil vorgenommen werden soll

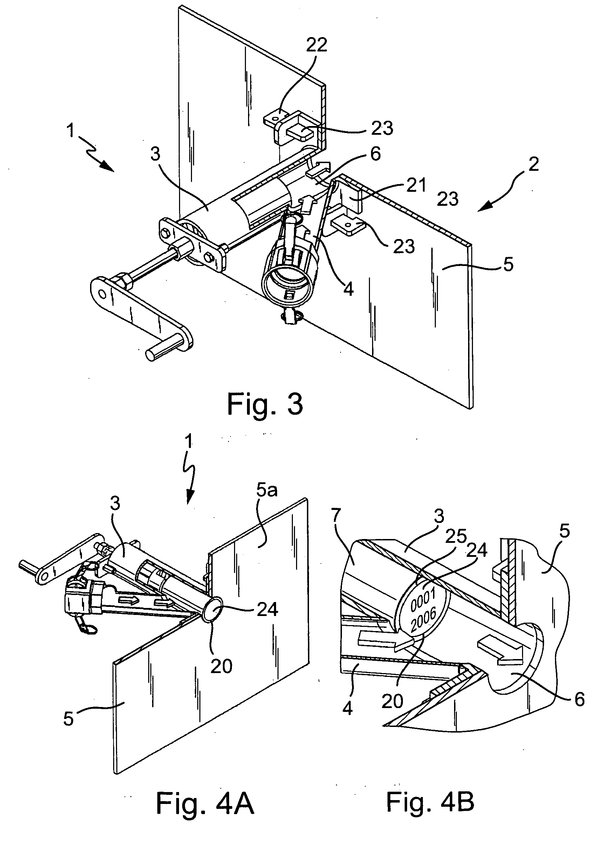

Figur 3 zeigt eine alternative Ausführungsform des Füllanschlusses 1, der nicht mit der Schalung 2 verschweißt ist. Stattdessen ist an dem schalungsnahen Ende des Kolbenrohres 3 ein Flansch 21 vorgesehen, der in einer Aufnahme 22 an der Außenseite des Schalungselements 5 gehalten wird. Die Aufnahme 22, die in dem gezeigten Beispiel durch den Bolzen 23 realisiert ist, gewährleistet eine zuverlässige und passgenaue Positionierung des Füllanschlusses 1 an der Schalung 2. Hierzu müssen die Aufnahme 22 und der Flansch 21 aufeinander abgestimmt sein.

Generell sind zwei Varianten möglich. In der ersten Variante ragt das Kolbenrohr 3 mit seinem schalungsnahen Ende über den Flansch 21 hinaus. In diesem Fall ist die Öffnung 6 des Schalungselements 5 in etwa so groß oder leicht größer als der Außendurchmesser des Kolbenrohres 3. Das Kolbenrohr 3 wird also in die Öffnung 6 des Schalungselements 5 eingeführt. Hierdurch ergibt sich eine gute Fixierung und exakte Positionierung des Füllanschlusses 1 an der Schalung 2. Der Überstand des Kolbenrohres 3 über den Flansch 21 entspricht in diesem Fall der Dicke des Schalungselements 5.

In der zweiten Variante ist der Flansch 21 bündig am Kolbenrohr 3 angeordnet. Der Innendurchmesser des Kolbenrohres 3 entspricht dann exakt dem Durchmesser der Öffnung 6 des Schalungselements 5. Hierbei wird auf die zusätzliche Unterstützung durch das Kolbenrohr bei der Positionierung des Füllanschlusses verzichtet. Dieser Nachteil wird jedoch durch eine exakte Fixierung des Füllanschlusses 1 an der Schalung 2 verhindert, insbesondere durch eine robuste und präzise Befestigung des Flansches 21 in der Aufnahme 22.

Die Figuren 4a und b zeigen einen Füllanschluss 1 von der Innenseite 5a des Schalungselements 5 der Schalung 2. Der Füllanschluss 1 umfasst einen Verschlusskolben 7, der eine auswechselbare Stirnwand 20 hat. Die Stirnwand 20 kann beispielsweise als Matrize 24 oder als Stempel ausgebildet sein. Die Matrize 24 kann wie im gezeigten Beispiel in Figur 4b neben dem Herstellungsdatum auch einen weiteren Zahlencode umfassen. Hierdurch ist es möglich, das herzustellende Betonfertigteil zu kennzeichnen, beispielsweise mit dem Produktionsjahr bzw. dem Produktionsdatum.

Die Matrize 24 ist in einem Rücksprung der Stirnwand 20 eingesetzt und ist so angeordnet, dass sie mit dem Rand 25 der Stirnwand 20 bündig ist. Durch diese Anordnung hat die Matrize 24 keine Auswirkungen auf die Justierung des Verschlusskolbens 7, da sich die Außenabmessungen des Kolbens nicht verändern.

## Patentansprüche

1. Füllanschluss für eine Schalung (2) zum Einfüllen von Beton in die Schalung (2) umfassend
- ein Kolbenrohr (3), dessen eines Ende an wenigstens einem Schalungselement (5) der Schalung (2) bündig abschließend anordnenbar ist, mit einem in dem Kolbenrohr (3) beweglichen Verschlusskolben (7), der eine in Richtung auf die Schalung (2) zu orientierte Stirnwand (20) aufweist und der von einem Stellmechanismus (10) bewegt wird, und
- einen Einfüllstutzen (4), der im Bereich der Schalung (2) unter einem spitzen Winkel mit einer Wandung des Kolbenrohrs (3) derart verbunden ist, dass in den Einfüllstutzen (4) eingefüllter Beton durch das Kolbenrohr (3) in die Schalung (2) hineinfließt,
wobei der Verschlusskolben (7) so in dem Kolbenrohr (3) bewegbar ist, dass die Stirnwand (20) des Verschlusskolbens (7) schalungsglatt mit der Schalung (2) abschließt.

2. Füllanschluss nach Anspruch 1, **dadurch gekennzeichnet, dass** der Verschlusskolben (7) in der Position, in der die Stirnwand (20) schalungsglatt mit dem Ende des Kolbenrohres (3) abschließt, den Einfüllstutzen (4) mit seiner Seitenwand (19) verschließt.

3. Füllanschluss nach Anspruch 1 oder 2, **dadurch gekennzeichnet, dass** eine Justiereinrichtung (10) vorgesehen ist, mit der der Bewegungsweg des Verschlusskolbens (7) in dem Kolbenrohr (3) einstellbar ist, vorzugsweise derart, dass der Verschlusskolben (2) über das Ende des Kolbenrohres (3) hinaus bewegbar ist.

4. Füllanschluss nach einem der vorhergehenden Anschlüsse, **dadurch gekennzeichnet, dass** der Einfüllstutzen (4) an seinem freien Ende eine Kupplung (16), bevorzugt eine Schnellkupplung zum schnellen An- und Abkuppeln von Förderleitungen, aufweist.

5. Füllanschluss nach einem der vorhergehenden Ansprüche, **dadurch gekennzeichnet, dass** der Füllanschluss (1) an der Schalung (2) angeflanscht ist.

6. Füllanschluss nach einem der Ansprüche 1 bis 4, **dadurch gekennzeichnet, dass** der Füllanschluss (1) fest mit der Schalung (2) verbunden ist, vorzugsweise mit ihr verschweißt ist.

7. Füllanschluss nach einem der vorhergehenden Ansprüche, **dadurch gekennzeichnet, dass** das Kolbenrohr (3) und der Verschlusskolben (7) zylindrisch und/oder der Einfüllstutzen (4) zylindrisch ausgebildet sind.

8. Füllanschluss nach einem der vorhergehenden Ansprüche, **dadurch gekennzeichnet, dass** der Stellmechanismus (10) eine Spindel (9) umfasst, die bevorzugt manuell und/oder motorisch angetrieben wird.

9. Füllanschluss nach einem der vorhergehenden Ansprüche, **dadurch gekennzeichnet, dass** zwischen dem Verschlusskolben (7) und dem Kolbenrohr (3) eine Dichtung vorgesehen ist, die bevorzugt als amorphe Dichtung ausgebildet ist und besonders bevorzugt von einem Fettfilm gebildet wird.

10. Füllanschluss nach einem der vorhergehenden Ansprüche, **dadurch gekennzeichnet, dass** die Stirnwand (20) des Verschlusskolbens (7) eine auswechselbare Stirnfläche umfasst.
